# FASCICULE DE BREVET EUROPEEN

(11) **EP 1 170 842 B1**
(45) Date de publication et mention de la délivrance du brevet: **24.12.2008**
(21) Numéro de dépôt: 01401759.4
(22) Date de dépôt: 02.07.2001
(51) Int. Cl.: H02B 1/06

(54) **Boîte industrielle à charnière démontable**
Industrielle Dose mit demontierbarem Scharnier
Industrial box with separable hinge

(30) Priorité: 07.07.2000 FR 0008922
(43) Date de publication de la demande: 09.01.2002
(73) Titulaire: LEGRAND FRANCE, 87000 Limoges (FR); LEGRAND SNC, 87000 Limoges (FR)
(72) Inventeur: Garnaudie, Sébastien, 87220 Feytiat (FR); Nicolas, Yves, 87480 Saint Priest Taurion (FR)
(74) Mandataire: Santarelli

(56) Documents cités:
- GB-A- 2 187 228

## Description

La présente invention concerne de manière générale les boîtes industrielles, en matière plastique, destinées à renfermer notamment des connexions de câbles ou de conducteurs électriques et/ou des appareillages électriques ou électroniques

Une telle boîte comporte une charnière, un couvercle fermant un boîtier, le couvercle comprenant au moins une ouverture destinée à être positionnée en regard d'au moins un logement de réception prévu dans le boîtier, pour la mise en place d'un élément de verrouillage pour verrouiller le couvercle en position fermée sur le boîtier, ou d'une charnière démontable pour monter à pivotement le couvercle sur le boîtier, ladite charnière comportant deux paumelles articulées l'une par rapport à l'autre autour d'un axe de pivotement, l'une des paumelles étant montée sur le couvercle et l'autre sur le boîtier.

Ainsi, cette boîte industrielle peut être utilisée avec son couvercle monté ou non à pivotement sur le boîtier.

Pour ce faire, les charnières démontables sont fournies en kit, en tant qu'accessoires, avec la boîte industrielle et peuvent être montées sur celle-ci à la demande par l'utilisateur.

On connaît déjà par le document GB-A-2 187 228 une boîte industrielle telle que définie ci-dessus dans laquelle chaque charnière comprend une paumelle solidarisée au boîtier à l'aide d'une vis montée dans un desdits logements de réception prévus à cet effet dans le boîtier, et une autre paumelle solidarisée au couvercle par l'intermédiaire d'une vis introduite dans l'ouverture du couvercle placée en regard dudit logement de réception du boîtier, et vissée dans une partie de la paumelle placée dans ladite ouverture du couvercle.

On connaît également une telle boîte dans laquelle la vis solidarisant l'une des paumelles au boîtier est du type quart de tour et dans laquelle la vis solidarisant l'autre paumelle au couvercle est introduite par l'extérieur alors que la paumelle est placée du côté intérieur du couvercle.

Outre le fait que le montage d'une telle charnière est relativement complexe car il fait intervenir deux vissages, un vissage quart de tour sur le boîtier et un vissage sur le couvercle, il laisse apparentes les têtes de vis de montage de la paumelle sur le couvercle au travers des ouvertures du couvercle, ce qui est relativement inesthétique.

Pour parfaire l'esthétique d'une telle boîte, il est prévu alors des caches rapportés sur les têtes de vis apparentes via les ouvertures du couvercle pour les masquer et les protéger.

Afin de remédier aux inconvénients précités, la présente invention propose une nouvelle boîte industrielle dans laquelle le montage des charnières d'articulation du couvercle sur le boîtier est particulièrement aisé et esthétique.

Plus particulièrement, l'invention propose une boîte industrielle comportant une charnière, un couvercle fermant un boîtier, le couvercle comprenant au moins une ouverture destinée à être positionnée en regard d'au moins un logement de réception prévu dans le boîtier, pour la mise en place d'un élément de verrouillage pour verrouiller le couvercle en position fermée sur le boîtier, ou d'une charnière démontable pour monter à pivotement le couvercle sur le boîtier, ladite charnière comportant deux paumelles articulées l'une par rapport à l'autre autour d'un axe de pivotement, l'une des paumelles étant montée sur le couvercle et l'autre sur le boîtier, caractérisée en ce que l'une des deux paumelles intègre son moyen de montage sur le couvercle ou le boîtier, ce moyen de montage venant de formation avec celle-ci.

Selon une caractéristique particulièrement avantageuse de la boîte industrielle selon l'invention, ledit moyen de montage est un moyen de montage quart de tour.

Selon une autre caractéristique avantageuse de la boîte industrielle selon l'invention, ladite paumelle intégrant ledit moyen de montage est destinée à être montée depuis l'extérieur du couvercle dans une ouverture de ce dernier, l'autre paumelle étant montée sur le boîtier.

Selon d'autres caractéristiques avantageuses et non limitatives de la boîte Industrielle selon l'invention :
- ladite paumelle intégrant ledit moyen de montage comporte deux segments sensiblement en forme de L, l'un horizontal étant destiné à recouvrir ladite ouverture du couvercle et portant, sur une face inférieure d'une partie d'extrémité libre, ledit moyen de montage, l'autre vertical portant, sur un bord horizontal de sa partie d'extrémité libre, l'axe de pivotement de ladite charnière, et l'autre paumelle comporte une chape de réception dudit axe de pivotement. La paumelle montée sur le couvercle masque du même coup ladite ouverture dudit couvercle dans laquelle elle est montée ;
- ladite paumelle comportant la chape de réception est vissée sur un bossage de positionnement prévu sur le boîtier à côté d'un logement de réception, de sorte que ladite chape fait saillie du bord périphérique du boîtier ;
- ladite paumelle comportant la chape de réception est encliquetée sur un bossage de positionnement prévu sur le boîtier à côté dudit logement de réception, de sorte que ladite chape fait saillie du bord périphérique externe du boîtier
- ladite paumelle comportant la chape de réception comprend un moyen de montage quart de tour qui, venant de formation avec la paumelle, est apte à être monté dans un logement de réception du boîtier,
- le couvercle comprend, dans sa paroi verticale périphérique, au moins une portion sécable destinée à être coupée pour permettre l'assemblage des paumelles de ladite charnière à l'extérieur de ladite boîte ;
- chaque charnière est réalisée par moulage d'une matière plastique ; et
- ledit couvercle comporte, dans ses quatre coins, quatre ouvertures venant en regard de quatre logements de réception du boîtier, deux ouvertures du couvercle étant destinées également à la mise en place de deux charnières d'articulation démontables.

L'invention propose également une charnière démontable pour l'articulation d'un couvercle sur un boîtier, notamment d'une boîte industrielle, comportant deux paumelles articulées l'une par rapport a l'autre autour d'un axe de pivotement, l'une des deux paumelles étant destinée à être montée sur le couvercle et l'autre sur le boîtier, caractérisée en ce que l'une des deux paumelles intègre son moyen de montage sur le couvercle ou le boîtier, ce moyen de montage venant de formation avec celle-ci.

Selon un mode de réalisation préférentiel de cette charnière, ledit moyen de montage est un moyen quart de tour.

Selon ce mode de réalisation préférentiel, ladite paumelle intégrant ledit moyen de montage comporte deux segments sensiblement en forme de L, l'un horizontal portant, sur une face inférieure d'une partie d'extrémité libre, ledit moyen de montage, l'autre vertical portant, sur un bord horizontal de sa partie d'extrémité libre, l'axe de pivotement de ladite charnière, et l'autre paumelle comporte une chape de réception dudit axe de pivotement.

En outre, la paumelle comportant ladite chape de réception comprend, à l'opposé de cette chape, un orifice traversant pour le passage d'une vis pour sa fixation par vissage au boîtier ou au couvercle.

En variante, la paumelle comportant ladite chape de réception comprend, à l'opposé de cette chape, des moyens d'encliquetage aptes à coopérer avec des moyens complémentaires prévus sur le boîtier ou sur le couvercle.

Selon une autre variante, la paumelle comportant ladite chape de réception comprend, de manière décalée latéralement par rapport à cette dernière, un moyen de montage quart de tour qui vient de formation avec ladite paumelle.

Avantageusement, une telle charnière est réalisée par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective éclatée d'une boîte industrielle selon l'invention ;
- la figure 2 est une vue en perspective de la boîte industrielle représentée sur la figure 1, à l'état ouvert, avec son couvercle monté à pivotement sur le boîtier ;
- la figure 3 est une vue en perspective de la boîte industrielle représentée sur la figure 2 à l'état fermé ; et
- la figure 4 est une vue en perspective éclatée de deux charnières selon l'invention.

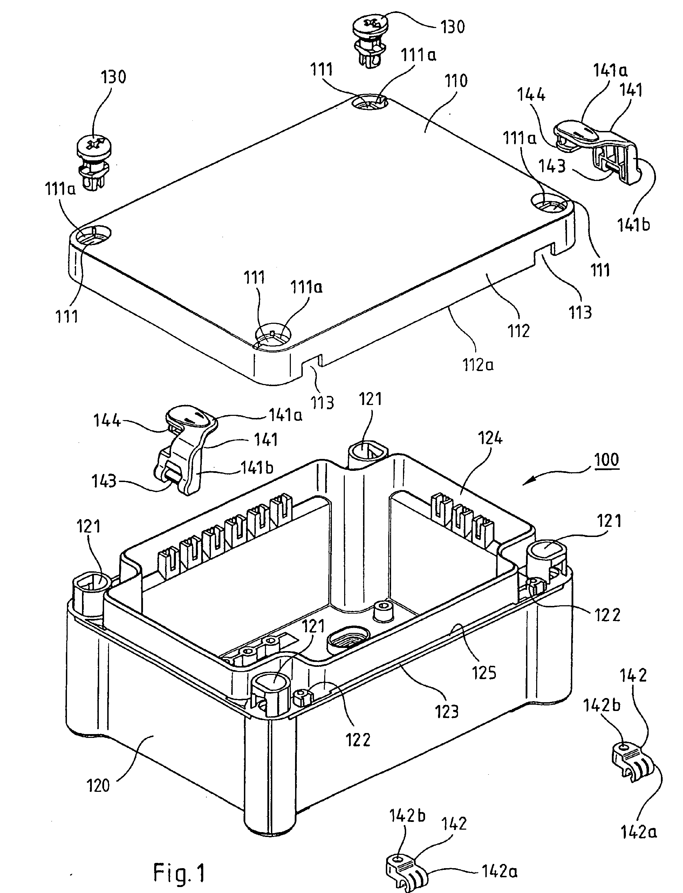

Sur les figures 1 à 3, on a représenté une boîte industrielle 100 réalisée généralement en matière plastique et servant notamment au logement de connexions de câbles ou de conducteurs électriques et/ou d'appareillages électriques ou électroniques.

Une telle boîte est alors le plus souvent étanche à l'eau, comme c'est le cas ici.

Cette boîte industrielle 100 comporte un couvercle 110 fermant un boîtier 120.

Ici, le boîtier 120 présente une forme générale rectangulaire et, de ce fait, le couvercle 110, qui ferme l'ouverture supérieure de ce boîtier, est également de forme rectangulaire.

Le boîtier 120 comporte, en partie supérieure, une paroi verticale périphérique 124 qui prolonge sa paroi intérieure délimitant son volume interne et qui est située en retrait par rapport à son bord périphérique externe 123, de sorte qu'il est défini, entre cette paroi verticale périphérique 124 et le bord périphérique externe 123, un trottoir périphérique 125.

Le couvercle 110 comporte, sur sa face intérieure tournée vers l'intérieur du boîtier 120, une gorge périphérique logeant un joint d'étanchéité 114 destiné à être comprimé contre le bord supérieur libre 124a de la paroi verticale périphérique 124 du boîtier, lorsque ledit couvercle est en position fermée sur le boîtier, de façon à établir une étanchéité vis-à-vis de l'extérieur.

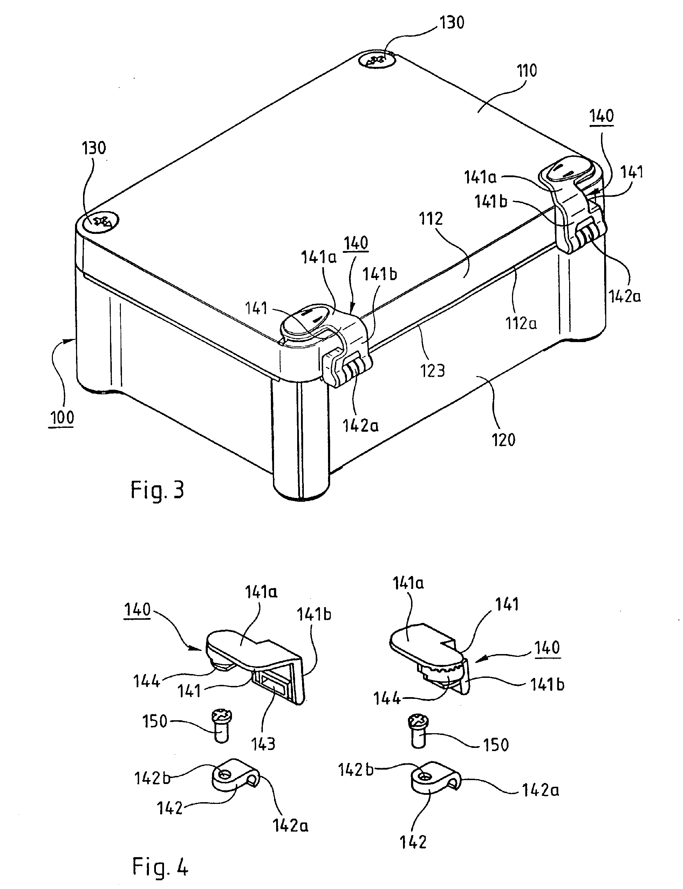

Comme le montre plus particulièrement la figure 3, en position fermée, le bord périphérique 112a du couvercle 110 s'appuie contre le bord périphérique externe 123 du boîtier 120 de façon à assurer une continuité de parois verticales entre la paroi externe verticale du boîtier 120 et la paroi verticale périphérique 112 du couvercle 110.

Le couvercle 110 comporte, en outre, à ses quatre coins, quatre ouvertures 111 destinées à être positionnées en regard de quatre logements de réception 121 prévus dans le boîtier 120, pour la mise en place d'un élément de verrouillage 130, ici une vis quart de tour, pour verrouiller le couvercle 110 en position fermée sur le boîtier 120, ou d'une charnière démontable 140 pour monter à pivotement le couvercle 110 sur le boîtier 120.

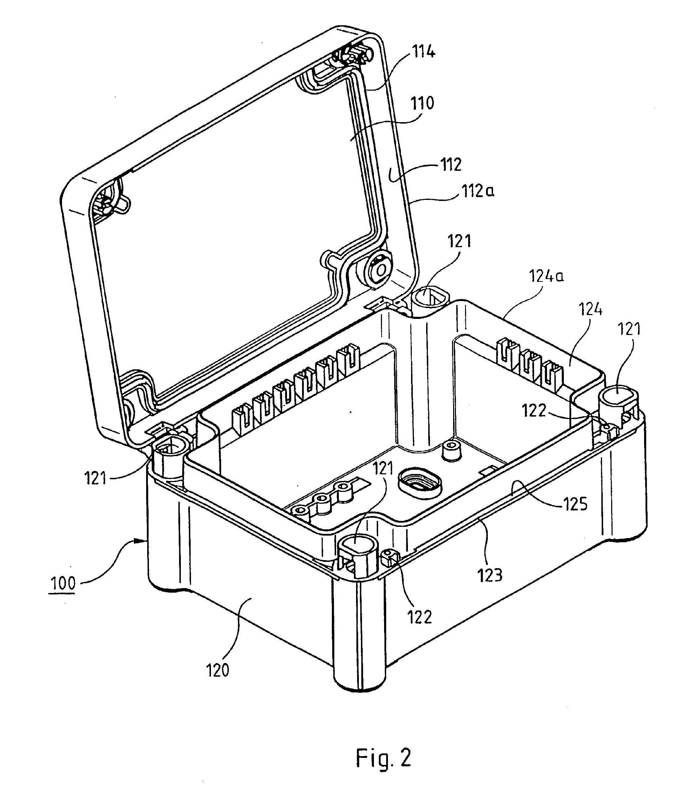

Comme le montrent plus particulièrement les figures 1 et 2, les logements de réception 121 sont ici des puits de montage de vis quart de tour, qui sont positionnés sur le trottoir 125 ; pour ce faire, ladite paroi verticale périphérique 124, située en retrait par rapport au bord périphérique externe 123 du boîtier 120, présente, au niveau des quatre coins du boîtier, des décrochements laissant une place suffisante au puits ou logements de réception 121.

De même, en ce qui concerne le couvercle 110, la gorge de montage du joint d'étanchéité 114 présente, au niveau des quatre coins du couvercle, des décrochements similaires pour le positionnement des ouvertures 111. La gorge suit alors le contour du bord supérieur libre 124a de ladite paroi verticale périphérique 124 du boîtier 120.

Les ouvertures 111 du couvercle 110 sont pourvues intérieurement d'une rampe de montage 111a d'une vis quart de tour 130 de sorte que chaque vis quart de tour 130 coopère, d'une part, avec chaque ouverture 111 du couvercle 100, et, d'autre part, avec chaque logement de réception 121 du boîtier 120 afin de solidariser ledit couvercle à l'état fermé audit boîtier.

Sur les figures 1 à 3, le couvercle 110 est monté à pivotement sur le boîtier 120 par l'intermédiaire de deux charnières démontables 140 montées dans deux ouvertures 111 du couvercle 110.

Chaque charnière démontable 140 se présente sous la forme d'un kit représenté sur la figure 4.

Plus particulièrement, chaque charnière 140 comporte deux paumelles 141, 142 articulées l'une par rapport à l'autre autour d'un axe de pivotement 143, l'une des paumelles 141 étant destinée à être montée sur le couvercle 110 et l'autre 142 sur le boîtier 120.

Ici, préférentiellement, la paumelle 141 qui est montée sur le couvercle 110 comprend un moyen de montage 144 qui vient de formation avec celle-ci.

Ce moyen de montage est avantageusement un moyen de montage quart de tour qui coopère avec la rampe 111a de montage quart de tour prévue dans chaque ouverture 111 du couvercle 110.

Ainsi, cette paumelle 141 intégrant son moyen de montage quart de tour 144 est destinée (voir figures 1 et 3) à être montée depuis l'extérieur du couvercle 110 dans une ouverture 111 de ce dernier, l'autre paumelle 142 étant montée sur le boîtier 120 à côté du logement de réception 121 situé en regard de ladite ouverture 111, c'est-à-dire de manière décalée latéralement par rapport à l'axe dudit logement de réception.

La paumelle 141 intégrant son moyen de montage à quart de tour 144 comporte deux segments 141a, 141b sensiblement en forme de L, l'un horizontal 141a étant destiné à recouvrir l'ouverture 111 du couvercle 110 dans laquelle la charnière est montée, et portant, sur une face inférieure d'une partie d'extrémité libre, son moyen de montage à quart de tour 144.

L'autre segment 141b est un segment vertical portant, sur un bord horizontal inférieur de sa partie d'extrémité libre, l'axe de pivotement 143 de ladite charnière 140.

Comme le montre plus particulièrement la figure 3, lorsque la paumelle 141 de la charnière est montée sur le couvercle 110, elle masque l'ouverture 111 de montage de sorte qu'elle forme par elle-même un cache esthétique de ladite ouverture 111.

L'autre paumelle 142 comporte principalement une chape de réception 142a de l'axe de pivotement 143 portée par la paumelle 141.

Les deux paumelles 141, 142 sont assemblées l'une à l'autre par encliquetage.

La paumelle 142 comportant la chape de réception 142a est, ici, vissée sur un bossage de positionnement 122 prévu sur le trottoir 125 du boîtier 120 à côté de chaque logement de réception 121 situé en regard d'une ouverture 111 du couvercle accueillant une charnière, c'est-à-dire de manière décalée latéralement par rapport à ce logement de réception, de sorte qu'une fois montée ladite chape de réception 142a fait saillie du bord périphérique externe 123 du boîtier 120.

Un tel montage de manière décalée de la paumelle 142 portant la chape de réception 142a est prévu pour permettre le montage à quart de tour de la paumelle 141 sur le couvercle 110.

Afin de permettre le montage par vissage de la paumelle 142 portant la chape de réception 142a, cette dernière comporte, à l'opposé de la chape de réception 142a, un orifice traversant 142b permettant le passage d'une vis de fixation 150 qui, comme le montre la figure 4, fait partie du kit de montage de chaque charnière fourni avec la boîte industrielle 100.

Bien entendu, selon un autre mode de réalisation non représenté, on peut prévoir que ladite paumelle 142 comportant la chape de réception 142a soit encliquetée sur un bossage de positionnement prévu sur le boîtier à côté dudit logement de réception de sorte que ladite chape fasse saillie du bord périphérique du boîtier.

Avantageusement, chaque charnière 140 est réalisée par moulage d'une matière plastique.

Bien entendu, comme le montre plus particulièrement la figure 1, le couvercle 110 de la boîte industrielle 100 comporte, dans sa paroi verticale périphérique 112, des ouvertures 113 positionnées de manière adéquate pour permettre l'assemblage des paumelles 141, 142 de ladite charnière 140 à l'extérieur de ladite boîte 100.

Ces ouvertures 113 peuvent être avantageusement réalisées par découpage d'une portion sécable de ladite paroi verticale périphérique 112 du couvercle 110.

Ainsi, avantageusement, un utilisateur peut monter facilement les charnières sur la boîte industrielle selon l'invention, en vissant la paumelle comportant la chape de réception sur le boîtier dans les bossages de positionnement prévus à cet effet, et en montant par l'extérieur l'autre paumelle de chaque charnière par un simple montage quart de tour, puis en encliquetant chaque paumelle montée sur le couvercle dans la chape de réception de la paumelle montée sur le boîtier.

Une telle charnière présente avantageusement peu de pièces, ce qui facilite son montage sur la boîte industrielle, et comporte une paumelle formant également un moyen de masquage des ouvertures de montage prévues sur le couvercle.

Selon une variante, on peut envisager que la paumelle comportant la chape de réception comprenne un moyen de montage quart de tour qui vient de formation avec ladite paumelle et qui est apte à être monté dans un logement de réception du boîtier. Cette paumelle présente alors, avantageusement, la forme d'un L s'étendant horizontalement et portant, à une extrémité, ladite chape de réception et, à l'autre extrémité, ledit moyen de montage quart de tour de sorte que ce dernier est décalé latéralement par rapport à ladite chape de réception.

## Revendications

1. Boîte industrielle (100) comportant une charnière (140), un couvercle (110) fermant un boîtier (120), le couvercle (110) comprenant au moins une ouverture (111) destinée à être positionnée en regard d'au moins un logement de réception (121) prévu dans le boîtier (120), pour la mise en place d'un élément de verrouillage (130) pour verrouiller le couvercle (110) en position fermée sur le boîtier (120), ou d'une charnière démontable (140) pour monter à pivotement le couvercle (110) sur le boîtier (120), ladite charnière (140) comportant deux paumelles (141, 142) articulées l'une par rapport à l'autre autour d'un axe de pivotement (143), l'une des paumelles (141) étant montée sur le couvercle (110) et l'autre (142) sur le boîtier (120), **caractérisée en ce que** l'une des deux paumelles (141) intègre son moyen de montage (144) sur le couvercle ou le boîtier, ce moyen de montage venant de formation avec celle-ci.

2. Boîte (100) selon la revendication 1, **caractérisée en ce que** ledit moyen de montage (144) est un moyen de montage quart de tour.

3. Boîte (100) selon la revendication 1 ou 2, **caractérisée en ce que** ladite paumelle (141) intégrant ledit moyen de montage (144) est destinée à être montée depuis l'extérieur du couvercle (110) dans une ouverture (111) de ce dernier, l'autre paumelle (142) étant montée sur le boîtier (120).

4. Boîte (100) selon la revendication 3, **caractérisée en ce que** ladite paumelle (141) intégrant ledit moyen de montage (144) comporte deux segments (141a, 141b) sensiblement en forme de L, l'un horizontal (141a) étant destiné à recouvrir ladite ouverture (111) du couvercle (110) et portant, sur une face inférieure d'une partie d'extrémité libre, ledit moyen de montage (144), l'autre vertical (141b) portant, sur un bord horizontal de sa partie d'extrémité libre, l'axe de pivotement (143) de ladite charnière (140), et **en ce que** l'autre paumelle (142) comporte une chape de réception (142a) dudit axe de pivotement (143).

5. Boîte (100) selon la revendication 4, **caractérisée en ce que** ladite paumelle (142) comportant la chape de réception (142a) est vissée sur un bossage de positionnement (122) prévu sur le boîtier à côté d'un logement de réception (121), de sorte que ladite chape (142a) fait saillie du bord périphérique externe (123) du boîtier (120).

6. Boîte (100) selon la revendication 4, **caractérisée en ce que** ladite paumelle comportant la chape de réception est encliquetée sur un bossage de positionnement prévu sur le boîtier à côté d'un logement de réception, de sorte que ladite chape fait saillie du bord périphérique externe du boîtier.

7. Boîte (100) selon la revendication 4, **caractérisé en ce que** ladite paumelle comportant la chape de réception comprend un moyen de montage quart de tour qui, venant de formation avec la paumelle, est apte à être monté dans un logement de réception du boîtier.

8. Boîte (100) selon l'une des revendications 1 à 7, **caractérisée en ce que** le couvercle (110) comprend, dans sa paroi verticale périphérique (112), au moins une portion sécable destinée à être découpée pour permettre l'assemblage des paumelles (141, 142) de ladite charnière (140) à l'extérieur de ladite boîte (100).

9. Boîte (100) selon l'une quelconque des revendications précédentes, **caractérisée en ce que** chaque charnière (140) est réalisée par moulage d'une matière plastique.

10. Boîte (100) selon l'une quelconque des revendications précédentes, **caractérisée en ce que** ledit couvercle (110) comporte, dans ses quatre coins, quatre ouvertures (111) venant en regard de quatre logements de réception (121) du boîtier (120), deux ouvertures (111) du couvercle (110) étant destinées également à la mise en place de deux charnières d'articulation démontables (140).

11. Charnière démontable (140) pour l'articulation d'un couvercle (110) sur un boîtier (120), comportant deux paumelles (141, 142) articulées l'une par rapport à l'autre autour d'un axe de pivotement (143), l'une (141) des paumelles étant destinée à être montée sur le couvercle (110) et l'autre (142) sur le boîtier (120), **caractérisée en ce que** l'une (141) des deux paumelles intègre son moyen de montage (144) sur le couvercle ou le boîtier, ce moyen de montage venant de formation avec celle-ci.

12. Charnière (140) selon la revendication 11, **caractérisée en ce que** ledit moyen de montage (144) est un moyen de montage quart de tour.

13. Charnière (140) selon l'une des revendications 11 ou 12, **caractérisée en ce que** ladite paumelle (141) intégrant ledit moyen de montage (144) comporte deux segments (141a, 141b) sensiblement en forme de L, l'un horizontal (141a) portant, sur une face inférieure d'une partie d'extrémité libre, ledit moyen de montage (144), l'autre vertical (141b) portant, sur un bord horizontal de sa partie d'extrémité libre, l'axe de pivotement (143) de ladite charnière (140), et **en ce que** l'autre paumelle (142) comporte une chape de réception (142a) dudit axe de pivotement (143).

14. Charnière (140) selon la revendication 13, **caractérisée en ce que** la paumelle (142) comportant ladite chape de réception (142a) comprend, à l'opposé de cette chape (142a), un orifice traversant (142b) pour le passage d'une vis de fixation (150) pour sa fixation au boîtier (120) ou au couvercle.

15. Charnière (140) selon la revendication 13, **caractérisée en ce que** la paumelle (142) comportant ladite chape de réception (142a) comprend, à l'opposé de cette chape, des moyens d'encliquetage aptes à coopérer avec des moyens complémentaires prévus sur le boîtier ou sur le couvercle.

16. Charnière (140) selon la revendication 13, **caractérisée en ce que** la paumelle comportant ladite chape de réception comprend, de manière décalée latéralement par rapport à cette dernière, un moyen de montage quart de tour qui vient de formation avec ladite paumelle

17. Charnière (140) selon l'une des revendications 11 à 16, **caractérisée en ce qu'**elle est réalisée par moulage d'une matière plastique.

## Claims

1. An industrial box (100) including a hinge (140), a lid (110) closing a tray (120), the lid (110) including at least one opening (111) adapted to be positioned facing at least one housing (121) in the tray (120) for fitting a locking member (130) for locking the lid (110) to the tray (120) in the closed position or a demountable hinge (140) for pivotably mounting the lid (110) on the tray (120), said hinge (140) including two hinge plates (141, 142) articulated to each other about a pivot (143), one (141) of the hinge plates being mounted on the lid (110) and the other (142) being mounted on the tray (120), which box is **characterised in that** one (141) of the hinge plates includes its means (144) for mounting it on the lid or on the tray, this mounting means being integral therewith.

2. A box (100) according to claim 1, **characterised in that** said mounting means (144) is a quarter-turn mounting means.

3. A box (100) according to claim 1 or claim 2, **characterised in that** said hinge plate (141) with said integral mounting means (144) is adapted to be mounted from outside the lid (110) in an opening (111) therein and the other hinge plate (142) is mounted on the tray (120).

4. A box (100) according to claim 3, **characterised in that** said hinge plate (141) with the integral mounting means (144) includes two substantially L-shaped segments (141a, 141b), one (141a) of which is a horizontal segment adapted to cover said opening (111) in the lid (110) and carrying said mounting means (144) on a bottom face of a free end part and the other (141b) of which is a vertical segment carrying the pivot (143) of said hinge (140) on a horizontal edge of its free end part, and **in that** the other hinge plate (142) includes a yoke (142a) for receiving said pivot (143).

5. A box (100) according to claim 4, **characterised in that** said hinge plate (142) including the yoke (142a) is screwed to a locating boss (122) on the tray alongside a housing (121) so that said yoke (142a) projects from the external peripheral edge (123) of the tray (120).

6. A box (100) according to claim, 4, **characterised in that** said hinge plate including the yoke is clipped onto a locating boss on the tray along side a housing so that said yoke projects from the external peripheral edge of the tray.

7. A box (100) according to claim 4, **characterised in that** said hinge plate including the yoke includes a quarter-turn mounting means integral with the hinge plate and adapted to be mounted in a housing or the tray.

8. A box (100) according to any of claims 1 to 7, **characterised in that** the lid (110) has in its peripheral vertical wall (112) at least one weakened portion adapted to be cut to enable assembly of the hinge plates (141, 142) of said hinge (140) to the exterior of said box (100).

9. A box (100) according to any preceding claim, **characterised in that** each hinge (140) is moulded from a plastics material.

10. A box (100) according to any preceding claim, **characterised in that** said lid (110) includes four openings (111) in its four corners facing four housings (121) in the tray (120) and two of the openings (111) in the lid (110) are adapted for fitting two demountable hinges (140).

11. A demountable hinge (140) for articulating a lid (110) to a tray (120), including two hinge plates (141, 142) articulated to each other about a pivot (143), one hinge plate (141) being designed to be mounted on the lid (110) and the other hinge plate (142) being designed to be mounted on the tray (120), which hinge is **characterised in that** one hinge plate (141) includes its means (144) for mounting it on the lid or tray, this mounting means being integral therewith.

12. A hinge (140) according to claim 11, **characterised in that** said mounting means (144) is a quarter-turn mounting means.

13. A hinge (140) according to claim 11 or claim 12, **characterised in that** said hinge plate (141) with said integral mounting means (144) has two substantially L-shaped segments (141a, 141b), one (141a) of which is a horizontal segment carrying said mounting means (144) on a bottom face of a free end part and the other (141b) of which is a vertical segment carrying the pivot (143) of said hinge (140) on a horizontal edge of its free end part, and **in that** the other hinge plate (142) includes a yoke (142a) adapted to receive said pivot (143).

14. A hinge (140) according to claim 13, **characterised in that** the hinge plate (142) including said yoke (142a) has a hole (142b) through it opposite said yoke (142a) through which can be passed a fixing screw (150) for fixing it to the tray (120) or to the lid.

15. A hinge (140) according to claim 13, **characterised in that** the hinge plate (142) including said yoke (142a) includes a clipping system opposite said yoke adapted to cooperate with a complementary system on the tray or on the lid.

16. A hinge (140) according to claim 13, **characterised in that** the hinge plate including said yoke includes an integral quarter-turn mounting means offset laterally relative to said yoke.

17. A hinge (140) according to any of claims 11 to 16, **characterised in that** it is moulded from a plastics material.

## Patentansprüche

1. Industriedose (100) mit einem Scharnier (140), einem ein Gehäuse (120) verschließenden Deckel (110), wobei der Deckel (110) wenigstens eine Öffnung (111) aufweist, die dazu bestimmt ist, gegenüber wenigstens einem im Gehäuse (120) vorgesehenen Aufnahmelager (121) positioniert zu Werden, um ein Verriegelungselement (130) zum Verriegeln des Deckels (110) in der geschlossenen Stellung auf dem Gehäuse (120) oder ein lösbares Scharnier (140) zur schwenkbaren Befestigung des Deckels (110) auf dem Gehäuse (120) anzubringen, wobei das Scharnier (140) zwei Bänder (141, 142) umfasst, die bezüglich einander um eine Schwenkachse (143) herum gelenkig gelagert sind, wobei eines der Bänder (141) auf dem Deckel (110) angebracht ist und das andere (142) auf dem Gehäuse (120),
**dadurch gekennzeichnet, dass** eines der beiden Bänder (141) sein Mittel (144) zur Befestigung auf dem Deckel oder dem Gehäuse beinhaltet, wobei das Befestigungsmittel an diesem angeformt ist.

2. Dose (100) nach Anspruch 1,
**dadurch gekennzeichnet, dass** das Befestigungsmittel (144) ein Vierteldrehungsbefestigungsmittel ist.

3. Dose (100) nach Anspruch 1 oder 2,
**dadurch gekennzeichnet, dass** das das Befestigungsmittel (144) umfassende Band (141) dazu bestimmt ist, außen am Deckel (110) in einer ÖfFnung (111) von diesem angebracht zu werden, während das andere Band (142) am Gehäuse (120) angebracht ist.

4. Dose (100) nach Anspruch 3,
**dadurch gekennzeichnet, dass** das das Befestigungsmittel (144) umfassende Band (141) zwei im Wesentlichen L-förmige Segmente (141a, 141b) aufweist, wobei das eine horizontale (141a) dazu bestimmt ist, die Öffnung (111) des Deckels (110) zu bedecken, und auf einer Unterseite eines freien Endteils das Befestigungsmittel (144) trägt, und das andere vertikale (141b) an einem waagrechten Rand seines freien Endteils die Schwenkachse (143) des Scharniers (140) trägt, und dass das andere Band (142) eine Gabel (142a) zur Aufnahme der Schwenkachse (143) aufweist.

5. Dose (100) nach Anspruch 4,
**dadurch gekennzeichnet, dass** das die Aufnahmegabel (142a) umfassende Band (142) auf eine auf dem Gehäuse neben einem Aufnahmelager (121) vorgesehene Positionierungsvorwölbung (122) solchermaßen festgeschraubt ist, dass die Gabel (142a) an dem umlaufenden äußeren Rand (123) des Gehäuses (120) übersteht.

6. Dose (100) nach Anspruch 4,
**dadurch gekennzeichnet, dass** das die Aufnahmegabel umfassende Band auf einer auf dem Gehäuse neben einem Aufnahmelager vorgesehenen Positionierungsvorwölbung solchermaßen einrastet, dass die Gabel an dem umlaufenden äußeren Rand des Gehäuses übersteht.

7. Dose (100) nach Anspruch 4,
**dadurch gekennzeichnet, dass** das die Aufnahmegabel umfassende Band ein Vierteldrehungsbefestigungsmittel aufweist, das, an das Band angeformt, in einem Aufnahmelager des Gehäuses befestigt zu werden vermag.

8. Dose (100) nach einem der Ansprüche 1 bis 7,
**dadurch gekennzeichnet, dass** der Deckel (110) in seiner senkrechte umlaufenden Wand (112) wenigstens einen abtrennbaren Abschnitt aufweist, der dazu bestimmt ist, ausgeschnitten zu werden, um außen an der Dose (100) das Zusammenfügen der Bänder (141, 142) des Scharniers (140) zu ermöglichen.

9. Dose (100) nach einem der vorhergehenden Ansprüche,
**dadurch gekennzeichnet, dass** jedes Scharnier (140) durch Formgießen eines Kunststoffs ausgeführt ist.

10. Dose (100) nach einem der vorhergehenden Ansprüche,
**dadurch gekennzeichnet, dass** der Deckel (110) in seinen vier Ecken vier Öffnungen (111) aufweist, die gegenüber vier Aufnahmelagern (121) des Gehäuses (120) zum Liegen kommen, wobei zwei Öffnungen (111) des Deckels (110) auch zur Anbringung von zwei lösbaren Scharnieren (140) bestimmt sind.

11. Lösbares Scharnier (140) zum Anlenken eines Deckels (110) an einem Gehäuse (120), mit zwei Bändern (141, 142), die bezüglich einander um eine Schwenkachse (143) herum gelenkig gelagert sind, wobei eines (141) der Bänder dazu bestimmt ist, auf dem Deckel (110) befestigt zu werden und das andere (142) auf dem Gehäuse (120),
**dadurch gekennzeichnet, dass** das eine (141) der beiden Bänder sein Mittel (144) zur Befestigung auf dem Deckel oder dem Gehäuse beinhaltet, wobei das Befestigungsmittel an diesem angeformt ist.

12. Scharnier (140) nach Anspruch 11,
**dadurch gekennzeichnet, dass** das Befestigungsmittel (144) ein Vierteldrehungsbefestigungsmittel ist.

13. Scharnier (140) nach einem der Ansprüche 11 oder 12,
**dadurch gekennzeichnet, dass** das das Befestigungsmittel (144) umfassende Band (141) zwei im Wesentlichen L-förmige Segmente (141a, 141b) aufweist, wobei das eine horizontale (141a) auf einer Unterseite eines freien Endteils das Befestigungsmittel (144) trägt, und das andere vertikale (141b) an einem waagerechten Rand seines freien Endteils die Schwenkachse (143) des Scharniers (140) trägt, und dass das andere Band (142) eine Gabel (142a) zur Aufnahme der Schwenkachse (143) aufweist.

14. Scharnier (140) nach Anspruch 13,
**dadurch gekennzeichnet, dass** das die Aufnahmegabel (142a) umfassende Band (142) auf der der Gabel (142a) entgegengesetzten Seite eine durchgehende Öffnung (142b) zum Hindurchführen einer Befestigungsschraube (150) zu seiner Befestigung am Gehäuse (120) oder am Deckel aufweist.

15. Scharnier (140) nach Anspruch 13,
**dadurch gekennzeichnet, dass** das die Aufnahmegabel (142a) umfassende Band (142) auf der der Gabel entgegengesetzten Seite Rastmittel aufweist, die mit den auf dem Gehäuse oder auf dem Deckel vorgesehenen komplementären Mitteln zusammenzuwirken vermögen.

16. Scharnier (140) nach Anspruch 13,
**dadurch gekennzeichnet, dass** das die Aufnahmegabel umfassende Band bezüglich der Gabel seitlich versetzt ein Vierteldrehungsbefestigungsmittel aufweist, das an das Band angeformt ist.

17. Scharnier (140) nach einem der Ansprüche 11 bis 16,
**dadurch gekennzeichnet, dass** es durch Formgießen eines Kunststoffs ausgeführt ist.
